# EUROPEAN PATENT APPLICATION

(11) **EP 3 553 715 A1**
(43) Date of publication of application: **16.10.2019**
(21) Application number: 17797513.3
(22) Date of filing: 14.11.2017
(51) Int. Cl.: G06Q 10/08

(54) **INTELLIGENT LOGISTICS ELECTRONIC LOCK DEVICE AND SYSTEM**

(30) Priority: 08.12.2016 CN 201611121845
(71) Applicant: Nuctech Company Limited, Beijing 100084 (CN)
(72) Inventor: CHEN, Zhiqiang, Beijing 100084 (CN); LI, Yuanjing, Beijing 100084 (CN); WU, Xianghao, Beijing 100084 (CN); ZHANG, Haitao, Beijing 100084 (CN); CHEN, Yongning, Beijing 100084 (CN)
(74) Representative: Boult Wade Tennant LLP
(86) International application number: PCT/CN2017/110773
(87) International publication number: WO 2018/103507

(57) **Abstract**

The present disclosure discloses an electronic lock device and system for smart logistics. The electronic lock device for smart logistics communicates with a data control device, and includes: a communication unit for receiving a control command; a storage unit for storing data information about a container locked by the electronic lock device; and a control unit configured to: if the control command received by the communication unit is a write command, control the communication unit to receive data information from the data control device, and store the received data information in the storage unit; and if the control command received by the communication unit is a read command, read data information from the storage unit, and send the read data information to the data control device through the communication unit.

## Description

### TECHNICAL FIELD

The present disclosure relates to the technical field of customs clearance detection, and more particularly to an electronic lock device and system for smart logistics.

### BACKGROUND

At this stage, the efficiency of passing through the inspection or customs clearance for a truck is relatively low, the reason is that it is needed to confirm whether a prohibited item is mixed within the container at more than one checkpoint or customs pass (such as a transfer checkpoint, a checkpoint on the way, an end checkpoint, etc.) through opening boxes to check the cargo or by means of security inspection equipment. Opening boxes to check the cargo is very time-consuming, and is more prone to appear the phenomenon of missing inspection; and security inspection equipment are generally expensive, which will greatly increase the operating costs of customs and other departments, neither economic nor easy to popularize.

An existing logistics electronic lock can prevent the container from being illegally opened during transportation between checkpoints, and can realize the monitoring of the travel path of the container and the remote automatic locking and unlocking of the electronic lock. This ensures, to a certain extent, the level of customs clearance, but the role of improving the efficiency of customs clearance is very limited due to the inability to carry data with a large file size that can be used or can assist during customs clearance.

### SUMMARY

To solve the above problems existing in the prior art, the present disclosure provides an electronic lock device and system for smart logistics.

According to one aspect of the present disclosure, there is provided an electronic lock device for smart logistics, which communicates with a data control device, and the electronic lock device for smart logistics includes: a communication unit for receiving a control command; a storage unit for storing data information about a container locked by the electronic lock device; and a control unit configured to: if the control command received by the communication unit is a write command, control the communication unit to receive data information from the data control device, and store the received data information in the storage unit; and if the control command received by the communication unit is a read command, read data information from the storage unit, and send the read data information to the data control device through the communication unit.

Preferably, the data information may include one or more of a X-ray scan image for the container, a scan image for a freight bill, and a scan image for a cargo list.

Preferably, the communication unit may be one of a WiFi unit, a mobile communication unit, a near field communication unit, or a Bluetooth unit.

According to another aspect of the present disclosure, there is provided an electronic lock system for smart logistics, comprising: the electronic lock device for smart logistics described above; the data control device; and a database device; wherein the data control device stores data information received from the electronic lock device for smart logistics into the database device; and the data information sent by the data control device to the electronic lock device for smart logistics is acquired from the database device.

Preferably, the data control device may include a user input interface through which the data control device receives the control command from a user.

Preferably, the data control device may be a smart terminal device.

Preferably, the system may further include: a user terminal configured to communicate with the data control device to send the control command of the user to the data control device.

Preferably, the data control device is a computer or a server.

With an electronic lock device and system for smart logistics provided by the present disclosure, data information about a container locked by an electronic lock device can be stored on the electronic lock device through wireless communication. The electronic lock device and system for smart logistics provided by the present disclosure can improve the efficiency of security inspection and reduce the time for customs clearance when be used or assisting (for example, providing query, reference or comparison) while passing through each checkpoint and customs pass of the security inspection for customs clearance.

### BRIEF DESCRIPTION OF THE DRAWINGS

Fig. 1 shows a structural block diagram of an electronic lock device for smart logistics according to embodiments of the present disclosure;
Fig. 2 shows a system architecture diagram of an electronic lock system for smart logistics according to embodiments of the present disclosure.

### DETAILED DESCRIPTION

Specific embodiments of the present disclosure will be described in detail below. It should be noted that the embodiments described herein are only for illustrative purposes and are not intended to limit the present disclosure. In the following description, numerous specific details are set forth in order to provide a thorough understanding of the present disclosure. However, it will be apparent to one of those ordinary skilled in the art that it is not necessary to employ the specific details to practice the present disclosure. In other instances, well-known circuits, materials, or methods have not been specifically described in order to avoid obscuring the present disclosure.

Reference to "one embodiment", "an embodiment", "one example", or "an example" throughout this specification means that a particular feature, structure, or characteristic described in connection with the embodiment or example is included in at least one embodiment of the present disclosure. Thus, appearances of phrases "in one embodiment", "in an embodiment", "one example", or "an example" in various places throughout the specification are not necessarily all referring to the same embodiment or example. Furthermore, the particular feature, structure, or characteristic may be combined in one or more embodiments or examples in any suitable combination and/or sub-combination. In addition, it will be understood by those ordinary skilled in the art that the accompanying drawings provided herein are for the purpose of illustration and that the accompanying drawings are not necessarily drawn to scale. The term "and/or" used herein includes any and all combinations of one or more of the associated listed items.

The present disclosure is described in detail below with reference to the accompanying drawings.

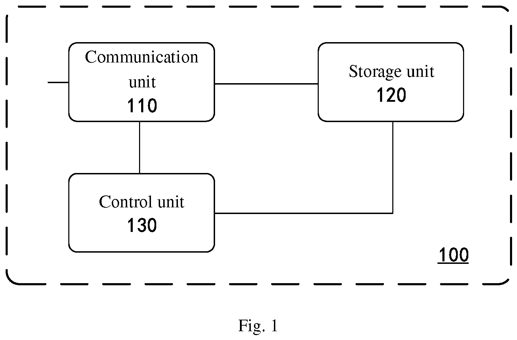

First, Fig. 1 shows a structural block diagram of an electronic lock device for smart logistics 100 according to embodiments of the present disclosure.

As shown in Fig. 1, the electronic lock device for smart logistics 100 includes a communication unit 110, a storage unit 120 and a control unit 130. The communication unit 110 is configured for receiving a control command. The storage unit 120 is configured for storing data information about a container locked by the electronic lock device. The control unit 130 is configured to: if the control command received by the communication unit 110 is a write command, control the communication unit 110 to receive data information from the data control device (not shown in Fig. 1), and store the received data information in the storage unit 120; and if the control command received by the communication unit 110 is a read command, read data information from the storage unit 120, and send the read data information to the data control device through the communication unit 110.

In one embodiment, the data information may include one or more of a X-ray scan image for the container, a scan image for a freight bill, and a scan image for a cargo list. In addition, the data information may further include identification information of the container, identification information of a freight bill, cargo identification information, and the like.

In one embodiment, the communication unit may be implemented as one or a combination of a WiFi unit, a mobile communication unit, a near field communication unit, or a Bluetooth unit.

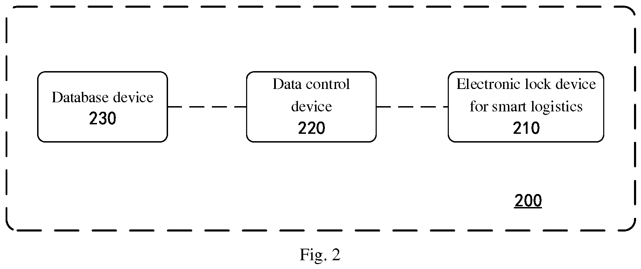

Next, Fig. 2 shows a system architecture diagram of an electronic lock system for smart logistics 200 according to embodiments of the present disclosure.

As shown in Fig. 2, the electronic lock system for smart logistics 200 includes an electronic lock device for smart logistics 210, a data control device 220, and a database device 230.

The electronic lock device for smart logistics 210 is configured for locking the container so as to ensure the safety of the container during the customs clearance.

In the embodiments of the present disclosure, the electronic lock device for smart logistics 210 is implemented as the electronic lock device for smart logistics 100 shown in FIG. 1, and has the structure and functions of the electronic lock device for smart logistics 100.

In particular, if the electronic lock device for smart logistics 210 sends the data information read from its storage unit to the data control device 220 through the communication unit therein, the data control device 220 receives the data information and stores the data information in the database device 230.

The data control device 220 may also send the electronic lock device for smart logistics 210 the data information acquired from the database device 230 about a container locked by the electronic lock device for smart logistics 210, for storing by the storage unit in the electronic lock device for smart logistics 210.

In one embodiment, the data control device 220 may send data information acquired from the database device 230 to the electronic lock device for smart logistics 210 in response to a data request received from the electronic lock device for smart logistics 210. The data request may be triggered by the write command in the electronic lock device for smart logistics 210.

In one embodiment, the data control device 220 may be implemented as a computer or server device. A user may enter a command (such as a character string, or a click on a button or link) through an input device (such as a keyboard, a mouse, etc.) of a computer, to enable control, use, and maintain of the electronic lock device for smart logistics.

In another embodiment, the data control device 220 may include a user input interface through which the data control device 220 receives the control command (including a read command and a write command) from a user. In this case, the data control device 220 may be implemented as a smart terminal (such as a smart phone), which is capable of wirelessly connecting to the electronic lock device for smart logistics 210 and the database device 230 by various manners mentioned above, and is capable of receiving a user input command (such as a character string, a touch operation, voice, etc.) through an input interface (such as a keyboard, a touch screen, a microphone, etc.), to enable control, use, and maintain of the electronic lock device for smart logistics.

In yet another embodiment, the electronic lock system for smart logistics 200 may further include a user terminal (such as a smart phone). The user terminal may communicate with the data control device 220 to send the control command of the user to the data control device 220. In this case, the data control device 220 may be implemented as a computer or server (having the same wireless communication capability with the user terminal). The user terminal does not need to connect to the electronic lock device for smart logistics 210 and the database device 230. It can send a user input (such as a character string, a touch operation, voice, etc.) from its own input device (such as a keyboard, a touch screen, a microphone, etc.) to the data control device 220, and thus enabling control, use, and maintain of the electronic lock device for smart logistics.

With the electronic lock device for smart logistics 100 of Fig. 1 and the electronic lock system for smart logistics 200 of Fig. 2, storage and transmission of data information with a large file size (such as various images mentioned above) can be implemented at the time of customs clearance, which improves the existing problems in the prior art.

The foregoing detailed description has set forth various embodiments of the inspection method and system by use of schematic diagrams, flowcharts, and/or examples. In a case that such schematic diagrams, flowcharts, and/or examples contain one or more functions and/or operations, it will be understood by those skilled in the art that each of the functions and/or operations of such schematic diagrams, flowcharts, or examples may be implemented individually and/or collectively by various structures, hardware, software, firmware or substantially any combination thereof. In one embodiment, portions of the subject matter described in the embodiments of the present disclosure may be implemented by application specific integrated circuits (ASICs), field programmable gate arrays (FPGAs), digital signal processors (DSPs), or other integrated formats. However, those skilled in the art will recognize that some aspects of the embodiments disclosed herein, in whole or in part, can be equivalently implemented in integrated circuits, implemented as one or more computer programs running on one or more computers (for example, implemented as one or more programs running on one or more computer systems), implemented as one or more programs running on one or more processors (for example, implemented as one or more programs running on one or more microprocessors), implemented as firmware, or implemented substantially in any combination of the above manners, and those skilled in the art, in light of the present disclosure, will be provided with the ability of designing a circuit and/or writing software and/or firmware code. In addition, those skilled in the art will recognize that the mechanisms of the subject matter described in the present disclosure can be distributed as a variety of forms of program products, and that the exemplary embodiments of the subject matter described in the disclosure are all applicable, regardless of the particular type of signal-carrying medium actually used to perform the distribution. Examples of signal-carrying media may include, but are not limited to, recordable type media such as a floppy disk, a hard disk drive, a compact disk (CD), a digital versatile disk (DVD), a digital magnetic tape, a computer memory and the like; and transmission media such as digital and/or analog communication media (such as a fiber optic cable, a waveguide, a wired communication link, a wireless communication link, etc.).

Although the present disclosure has been described with reference to several exemplary embodiments, it should be understood that the terms which have been employed are illustrative and exemplary, rather than limiting terms. As the present disclosure can be embodied in various forms without departing from the spirit or substance of the present disclosure, it should be understood that the embodiments described above are not limited to any of the details of the foregoing description, but should be widely interpreted within the spirit and scope defined by the appended claims, and thus all changes and modifications that fall within the claims or the equivalent scope thereof are intended to be covered by the appended claims.

## Claims

1. An electronic lock device for smart logistics, which communicates with a data control device, comprising:
a communication unit for receiving a control command;
a storage unit for storing data information about a container locked by the electronic lock device; and
a control unit configured to:
if the control command received by the communication unit is a write command, control the communication unit to receive data information from the data control device, and store the received data information in the storage unit; and
if the control command received by the communication unit is a read command, read data information from the storage unit, and send the read data information to the data control device through the communication unit.

2. The device according to claim 1, wherein the data information comprises one or more of a X-ray scan image for the container, a scan image for a freight bill, and a scan image for a cargo list.

3. The device according to claim 1, wherein the communication unit is one of a WiFi unit, a mobile communication unit, a near field communication unit, or a Bluetooth unit.

4. An electronic lock system for smart logistics, comprising:
the electronic lock device for smart logistics according to any of claims 1-3;
the data control device; and
a database device;
wherein the data control device stores data information received from the electronic lock device for smart logistics into the database device; and
the data information sent by the data control device to the electronic lock device for smart logistics is acquired from the database device.

5. The system according to claim 4, wherein the data control device comprises a user input interface through which the data control device receives the control command from a user.

6. The system according to claim 5, wherein the data control device is a smart terminal device.

7. The system according to claim 4, further comprising: a user terminal configured to communicate with the data control device to send the control command of the user to the data control device.

8. The system according to claim 7, wherein the data control device is a computer or a server.
